# EUROPÄISCHE PATENTANMELDUNG

(11) **EP 4 438 855 A1**
(43) Veröffentlichungstag der Anmeldung: **02.10.2024**
(21) Anmeldenummer: 24162285.1
(22) Anmeldetag: 08.03.2024
(51) Int. Cl.: F01D 5/02, F01D 5/04, F01D 5/06, F01D 5/08

(54) **ROTORANORDNUNG FÜR EINE NIEDERDRUCKTURBINE EINER STRÖMUNGSMASCHINE**

(30) Priorität: 30.03.2023 DE 102023108251
(71) Anmelder: MTU Aero Engines AG, 80995 München (DE)
(72) Erfinder: Fleischer, Ilse, 80995 München (DE)

(57) **Zusammenfassung**

Die Erfindung betrifft eine Rotoranordnung (20) für eine Niederdruckturbine (15) einer Strömungsmaschine (10) mit endseitiger Anbindung an eine Welle (16) der Strömungsmaschine (10), aufweisend mehrere in einer Strömungsrichtung (R) angeordnete und miteinander verbundene Laufstufen (21), wobei die in Strömungsrichtung (R) letzte Laufstufe (21d) mittels einer Rotorscheibe (22d) an die Welle (16) anbindbar ist.

## Beschreibung

Die Erfindung betrifft eine Rotoranordnung für eine Niederdruckturbine einer Strömungsmaschine mit endseitiger Anbindung an eine Welle der Strömungsmaschine, aufweisend mehrere in einer Strömungsrichtung angeordnete und miteinander verbundene Laufstufen. Zudem betrifft die Erfindung eine Niederdruckturbine und eine Strömungsmaschine mit einer solchen Rotoranordnung.

Es bestehen Bestrebungen, dass Flugtriebwerke weniger Kraftstoff verbrauchen, weniger Emissionen ausstoßen und zudem auch leiser werden sollen. Zur Erfüllung dieser geforderten Effizienzsteigerungen werden Strömungsmaschinen für Flugtriebwerke mit hohem Vortriebswirkungsgrad und kompakten Bauformen entworfen. Die Strömungsmaschine weist typischerweise einen Turbinenbereich mit einem Laufschaufelsystem auf, welches mit einer Welle der Strömungsmaschine verbundene Rotorscheiben umfasst, die jeweils eine Mehrzahl an Laufschaufeln tragen. Die Welle dient ihrerseits insbesondere dem Antrieb eines Verdichtersystems der Strömungsmaschine.

Der Turbinenbereich wird aufgrund des erforderlichen Gesamtdruckverhältnisses und der hohen Gaseintrittstemperaturen stark belastet. Während des Betriebs auftretende Drehzahlen erzeugen dabei hohe statische und dynamische Belastungen sowohl für die Rotorscheiben als auch für die Laufschaufeln. Bei Turbinen wird den mechanischen und thermischen Belastungen durch eine geringere Anzahl an Rotorscheiben bzw. Stufen und einer reduzierten Baulänge begegnet, wodurch sich auch die Zahl von Bauteilen reduzieren und ein verringertes Gewicht erreichen lässt.

Hiervon ausgehend ist es eine Aufgabe der vorliegenden Erfindung, eine verbesserte Rotoranordnung für eine Niederdruckturbine einer Strömungsmaschine vorzuschlagen. Ferner soll eine verbesserte Niederdruckturbine und auch Strömungsmaschine zur Verfügung gestellt werden. Dies wird erfindungsgemäß durch die Lehre der unabhängigen Ansprüche erreicht. Vorteilhafte Ausführungen der Erfindung sind Gegenstand der abhängigen Ansprüche.

Zur Lösung der Aufgabe wird eine Rotoranordnung für eine Niederdruckturbine einer Strömungsmaschine mit endseitiger Anbindung an eine Welle der Strömungsmaschine vorgeschlagen. Die Rotoranordnung weist mehrere in einer Strömungsrichtung angeordnete und miteinander verbundene Laufstufen auf, wobei die Rotoranordnung in Strömungsrichtung an der letzten Laufstufe mittels einer Rotorscheibe an die Welle anbindbar ist. Die Rotorscheibe ist dabei als sich in Strömungsrichtung radial erweiternde Kegelscheibe ausgebildet.

Die kegelscheibenförmige Rotorscheibe dient dabei einer drehbaren Lagerung von miteinander drehfest verbundenen Laufstufen der Rotoranordnung an der Welle der Strömungsmaschine. Dabei beeinflusst die Geometrie der als Kegelscheibe ausgebildeten Rotorscheibe das Verhalten des gesamten Rotors, die radialen wie auch axialen Auslenkungen, welche sich direkte auf den Wirkungsgrad der Niederdruckturbine auswirken. Durch die Ausbildung der Rotorscheibe als sich in Strömungsrichtung radial erweiternde Kegelscheibe können radiale und/ oder axiale Auslenkungen, insbesondere der über die Kegelscheibe angebundenen Bereiche der Rotoranordnung stabilisiert werden, wodurch eine Wirkungsgradsteigerung für die Niederdruckturbine ermöglicht werden kann. Zudem kann eine mechanische Stabilität der Rotoranordnung bei endseitiger Anbindung verbessert werden.

Gemäß weiterer Aspekte wird eine Niederdruckturbine für ein Flugtriebwerk, insbesondere eine vierstufige Niederdruckturbine, aufweisend eine hierin beschriebene Rotoranordnung vorgeschlagen sowie eine Strömungsmaschine für ein Flugtriebwerk, welche eine solche Niederdruckturbine und/ oder Rotoranordnung aufweist. Die mittels der hierin beschriebenen Ausführungsformen der vorgeschlagenen Rotoranordnung erzielbaren Effekte und Vorteile können gleichermaßen für die vorgeschlagene Niederdruckturbine bzw. Strömungsmaschine gelten. Insbesondere kann mittels der vorgeschlagenen Rotoranordnung eine gewichtsoptimierte und/ oder kompakte Bauform für die Niederdruckturbine bzw. Strömungsmaschine ermöglicht werden.

Eine Strömungsmaschine für einen Flugantrieb weist typischerweise wenigstens einen Verdichter, insbesondere einen Niederdruckverdichter und einen Hochdruckverdichter, eine Brennkammer sowie wenigstens eine Turbine, insbesondere eine Hochdruckturbine und eine Niederdruckturbine auf. Die Niederdruckturbine weist dabei insbesondere mehrere Stufen auf, die in Durchströmungsrichtung axial hintereinander positioniert sind. Jede Stufe wird dabei von einer feststehenden bzw. statischen Leitschaufelanordnung bzw. Leitstufe sowie einer rotierbaren Laufschaufelanordnung bzw. Laufstufe gebildet, wobei eine feststehende Leitstufe eine Mehrzahl radial angeordneter Leitschaufeln und eine rotierbare Laufstufe eine Mehrzahl radial angeordneter Laufschaufeln aufweist. Die Laufstufen bilden dabei die Rotoranordnung aus.

Üblicherweise weist jede Laufstufe jeweils eine Rotorscheibe auf, an welcher umfangsseitig die Laufschaufeln angeordnet sind, sowie jeweils wenigstens einen Flansch, der zur Verbindung mit einer weiteren Rotorscheibe dient. Dabei können Dichtungseinrichtungen zwischen den Laufstufen angeordnet sein, welche beispielsweise als Teil einer Labyrinth- oder Bürstendichtung ausgebildet sind.

Die Laufschaufeln sind insbesondere konzentrisch entlang einer Kreislinie um eine Mittelachse der Laufstufe bzw. der Strömungsmaschinenachse angeordnet. Dabei können die Laufschaufeln auch integral mit der Rotorscheibe ausgebildet sein oder als separat hergestellte Laufschaufeln über einen Schaufelfuß an der Rotorscheibe fixiert sein. Die stromaufwärts der letzten Laufstufe angeordneten Rotorscheiben sind insbesondere ringsegment- oder scheibensegmentförmig ausgebildet.

Die Erfindung beruht unter anderem auf der Idee, die Rotorscheibe der letzten Laufstufe zur endseitigen Anbindung der Rotoranordnung an der Welle als sich insbesondere gleichmäßig radial erweiternde Kegelscheibe auszubilden. Die Kegelscheibe weist dabei eine im Wesentlichen hohlkegel(stumpf)artige Geometrie bzw. Grundstruktur auf, bei welcher zwei axial beabstandet angeordnete, zur Rotationsachse der Welle konzentrische Kreisringe durch eine im Wesentlichen vergleichbar mit einer Kegelmantelfläche ausgebildeten Wandung miteinander verbunden sind. Im Axialschnitt weist die Kegelmantelfläche dabei einen insbesondere im Wesentlichen geradlinigen Verlauf auf. Der stromabwärts gelegene Kreisring weist dabei einen größeren Durchmesser auf als der stromaufwärts gelegene Kreisring. Die Kegelscheibe erweitert sich folglich in Strömungsrichtung der Strömungsmaschine. Die Erweiterung erfolgt dabei insbesondere gleichmäßig, kann aber insbesondere auch abschnittsweise eine gestufte oder gekrümmte Form aufweisen. Die Geometrie der Kegelscheibe wird ferner durch den axialen Abstand zwischen den Kreisflächen und damit der Höhe des Kegel(stumpf)s sowie durch die Wandungsdicke bestimmt.

An ihrem radial inneren Umfang und damit stromaufwärts weist die Rotorscheibe einen Wellenanbindungsbereich auf, mittels welchem diese an die Welle angebunden bzw. anbindbar ist. Durch die sich in Strömungsrichtung radial erweiternde Ausbildung kann die wellenseitige Anbindung der letzten Laufstufe bzw. einer stromabwärtigsten Nabe innerhalb einer axialen Erstreckung der Rotoranordnung erfolgen, wobei sowohl radiale als auch axiale Auslenkungen der Rotoranordnung bei der vorgeschlagenen endseitigen Anbindung in einem geeigneten Rahmen gehalten werden können.

Bei einer Ausführungsform der Rotoranordnung ist die als Kegelscheibe ausgebildete Rotorscheibe in axialer Richtung zwischen einer ersten und der letzten Laufstufe an die Welle angebunden. Dies ermöglicht eine besonders kurze und/ oder kompakte Bauweise der Rotoranordnung und dadurch der Niederdruckturbine. Hierbei kann die Rotorscheibe, insbesondere an einem Wellenanbindungsbereich mit der Welle verbunden bzw. an dieser gelagert sein. Der Wellenanbindungsbereich ist dabei insbesondere in geeigneter Weise zum Herstellen einer Verbindung mit der Welle ausgebildet. Dabei ist der Wellenanbindungsbereich insbesondere wenigstens abschnittsweise umlaufend und/ oder achsparallel zur Welle ausgebildet, um eine insbesondere kraft- und/ oder formschlüssige, insbesondere flächige Verbindung des Wellenanbindungsbereichs bzw. der Rotorscheibe und damit der Rotoranordnung mit der Welle zu ermöglichen, wodurch ein Kraftfluss zwischen der Rotoranordnung und der Welle herstellbar ist.

Bei einer Ausführungsform der Rotoranordnung weist die als Kegelscheibe ausgebildete Rotorscheibe zwischen einem radial inneren Wellenanbindungsbereich und einem radial äußeren Nabenbereich eine Wandung auf, welche im Wesentlichen ähnlich einer Kegelmantelfläche ausgebildet ist. Der Nabenbereich ist dabei insbesondere als eine in Umfangsrichtung durchgängig umlaufende, verstärkt gestaltete Struktur ausgebildet, welche zur Stabilisierung der Rotoranordnung gegenüber insbesondere drehzahlbedingten Belastungen dient. Dieser Nabenbereich ist insbesondere radial nach innen beabstandet von den Laufschaufeln in einem radial äußeren Bereich der Wandung der Rotorscheibe angeordnet. Durch die mittels der Wandung ausgebildete Kegelscheibenform, kann eine Steifigkeit der Rotorscheibe erzielt werden, die im Betrieb der Rotoranordnung auftretenden Belastungen standhalten kann.

Bei einer Ausführungsform der Rotoranordnung weist die Wandung der als Kegelscheibe ausgebildeten Rotorscheibe zwischen dem Wellenanbindungsbereich und dem Nabenbereich wenigstens eine Verjüngung und anschließend eine Aufweitung der Wanddicke auf, so dass die Wandung eine Taperform aufweist. Hierdurch kann die Wandung zwischen dem Ende der Verjüngung und dem Beginn der Aufweitung eine reduzierte Wanddicke gegenüber der Wandung in der Nähe oder am Wellenanbindungsbereich und/ oder in der Nähe oder am Nabenbereich aufweisen. So kann eine Geometrie bzw. Massenverteilung für die Rotorscheibe erreicht werden, die den betriebsmäßigen Belastungen an den insbesondere hierfür maßgeblichen Bereichen der Rotorscheibe genügt wobei gleichzeitig in anderen Bereichen Masse reduzierbar ist, wodurch eine Gewichtsreduzierung erreichbar ist. Die speziell getaperte Geometrie der Wandung der als Kegelscheibe ausgebildeten Rotorscheibe ermöglicht aufgrund ihrer speziellen Ausgestaltung eine akzeptable Auslenkung bei einer endseitigen Anbindung und damit ohne Gegenbalance jenseits der Anbindungsstelle.

Bei einer Ausführungsform der Rotoranordnung verläuft die Verjüngung und die anschließende Aufweitung der Wanddicke der Wandung vom Nabenbereich zum Wellenanbindungsbereich bzw. vom Wellenanbindungsbereich zum Nabenbereich. Die Wandung kann dabei eine im Axialschnitt einseitig oder beidseitig konkave innere und/ oder äußere Gestalt aufweisen bzw. in Richtung des Wellenanbindungsbereichs und/ oder Nabenbereich divergieren. Hierdurch kann die Wandstärke der Wandung wenigstens abschnittsweise reduziert ausfallen, wobei Gewicht einsparbar ist, die Rotorscheibe aber gleichzeitig den im Betrieb auftretenden Belastungen standhalten kann.

Bei einer Ausführungsform der Rotoranordnung schließt die Wandung einen Winkel im Bereich von 40° bis 60°, insbesondere im Bereich von 44° bis 56° mit der Rotationsachse der Welle und damit insbesondere auch der Strömungsmaschinenachse ein. Insbesondere schließt die Wandung mit der Rotationsachse der Welle einen Winkel von 40°, 41°, 42°, 43°, 44°, 45°, 46°, 47°, 48°, 49°, 50°, 51°, 52°, 53°, 54°, 55°, 56°, 57°, 58°, 59° oder 60° ein, wobei der genaue Winkel selbstverständlich auch einen Wert zwischen zwei angegebenen Winkeln betragen kann.

Hierdurch kann eine insbesondere radiale Erstreckung der Wandung derart gestaltet sein, dass ein mechanisch stabiler und selbsttragender Aufbau der Rotoranordnung auch bei hohen Drehzahlen gegeben ist.

Bei einer Ausführungsform der Rotoranordnung weist die Rotorscheibe am Wellenanbindungsbereich wenigstens einen Fillet-Radius auf. Ein solcher insbesondere in Umfangsrichtung umlaufender Fillet-Radius wird auch als (Ver-)Rundungs- oder Kehlradius bezeichnet. Dabei kann der Wellenanbindungsbereich in einem Axialschnitt im Wesentlichen eine Geometrie eines Dreiecks mit zwei konkaven Seiten aufweisen, mit einer der Welle zugewandten Seite, die achsparallel und gerade ausgebildet sein kann. Durch eine Anbindung mittels wenigstens einen Fillet-Radius kann eine Spannungskonzentration im Bereich des Wellenanbindungsbereichs durch mechanische Belastung reduziert werden.

Bei einer Ausführungsform der Rotoranordnung ist ein Lager des Rotors bzw. der Welle radial innerhalb einer zweiten Laufstufe der Rotoranordnung angeordnet. Durch die vorgeschlagene Gestaltung der endseitigen Rotorscheibe kann das Lager stromauf der Scheibenanbindung und dennoch nahe am stromabwärtigen Wellenende angeordnet werden. Dadurch kann die Welle bei einer vergleichswese geringen Länge dennoch nahe am stromabwärtigen Wellenende gelagert werden. Dies ermöglicht einen besonders vorteilhaften Kompromiss zwischen geringer Wellenlänge bzw. geringem Gewicht und stabiler Lagerung der Welle.

Bei einer Ausführungsform der Rotoranordnung beträgt ein axialer Abstand zwischen der ersten und der letzten Laufstufe 18 cm bis 28 cm, insbesondere 21 cm bis 25 cm. Insbesondere beträgt der Abstand zwischen der ersten und der letzten Laufstufe 18 cm, 19 cm, 20 cm, 21 cm, 22 cm, 23 cm, 24 cm, 25 cm, 26 cm, 27 cm, oder 28 cm, wobei der genaue Abstand selbstverständlich auch einen Wert zwischen zwei angegebenen Abständen betragen kann. Hieraus resultiert eine längenreduzierte Gestaltung der Rotoranordnung und damit auch der Niederdruckturbine.

Bei einer Ausführungsform der Rotoranordnung beträgt ein radialer Abstand zwischen der Strömungsmaschinenachse und einem Außendurchmesser einer ersten Rotorscheibe der ersten Laufstufe 19 cm bis 32 cm. Insbesondere beträgt der radiale Abstand zwischen der Strömungsmaschinenachse und dem Außendurchmesser der ersten Rotorscheibe der ersten Laufstufe 19 cm, 20 cm, 21 cm, 22 cm, 23 cm, 24 cm, 25 cm, 26 cm, 27 cm, 28 cm, 29 cm, 30 cm, 31 cm oder 32 cm, wobei der genaue Abstand selbstverständlich einen Wert zwischen zwei der angegebenen Abstände betragen kann. Diese Gestaltung ermöglicht weiter eine Gewichtsoptimierung der Niederdruckturbine.

Bei einer Ausführungsform der Rotoranordnung beträgt ein Verhältnis zwischen dem axialen Abstand zwischen der ersten und der letzten Laufstufe und dem radialen Abstand der Strömungsmaschinenachse zu dem Außendurchmesser der ersten Rotorscheibe 0,8 bis 1,6, insbesondere beträgt dieses Verhältnis 0,95 bis 1,45. Dies ermöglicht eine kompakte Ausführung der Rotoranordnung. Insbesondere beträgt das Verhältnis zwischen dem axialen Abstand zwischen der ersten und der letzten Laufstufe und dem radialen Abstand der Strömungsmaschinenachse zu dem Außendurchmesser der ersten Rotorscheibe 0,8; 0,85; 0,9; 0,95; 1; 1,05; 1,1; 1,15; 1,2; 1,25; 1,3; 1,35; 1,4; 1,45; 1,5; 1,55 oder 1,6, wobei der genaue Wert des Verhältnisses selbstverständlich auch zwischen zwei angegebenen Verhältnissen liegen kann.

Bei einer Ausführungsform der Rotoranordnung beträgt ein Verhältnis zwischen dem axialen Abstand zwischen der ersten und der letzten Laufstufe und einem axialen Abstand zwischen dem insbesondere mittleren Lager des Rotors und der letzten Laufstufe 1,0 bis 2 und insbesondere 1,2 bis 1,7. Insbesondere beträgt das Verhältnis zwischen dem axialen Abstand zwischen der ersten und der letzten Laufstufe und dem axialen Abstand zwischen dem Lager des Rotors und der letzten Laufstufe 1,0; 1,1; 1,2; 1,3; 1,4; 1,5; 1,6; 1,7; 1,8; 1,9; 2,0; 2,1; 2,2; 2,3 oder 2,4. Dabei kann der genaue Wert des Verhältnisses selbstverständlich auch zwischen zwei der angegebenen Verhältnissen liegen. Die vorgeschlagene Gestaltung ermöglicht weiterhin eine verbesserte mechanische Stabilität der Rotoranordnung.

Bei einer Ausführungsform der Rotoranordnung beträgt ein Verhältnis zwischen dem axialen Abstand zwischen der ersten und der letzten Laufstufe und einem Anbindungsabstand zwischen dem Lager des Rotors bzw. der Welle und dem Wellenanbindungsbereich 2,5 bis 3,5, insbesondere 2,7 bis 3,3. Insbesondere beträgt das Verhältnis zwischen dem axialen Abstand zwischen der ersten und der letzten Laufstufe und dem Anbindungsabstand zwischen dem Lager des Rotors und dem Wellenanbindungsbereich 2,5; 2,6; 2,7; 2,8; 2,9; 3,0; 3,1; 3,2; 3,3; 3,4 oder 3,5, wobei der genaue Wert des Verhältnisses selbstverständlich auch zwischen zwei der angegebenen Verhältnissen liegen kann. Diese Weiterbildung trägt zur Verbesserung der Belastungsfähigkeit der Rotoranordnung bei.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung eines Ausführungsbeispiels einer Strömungsmaschine insbesondere für ein Flugtriebwerk gemäß der vorliegenden Offenbarung; und
- Fig. 2: eine schematische Darstellung eines Ausschnitts eines Ausführungsbeispiels einer Rotoranordnung für eine Niederdruckturbine einer Strömungsmaschine mit endseitiger Anbindung an eine Welle der Strömungsmaschine gemäß der vorliegenden Offenbarung.

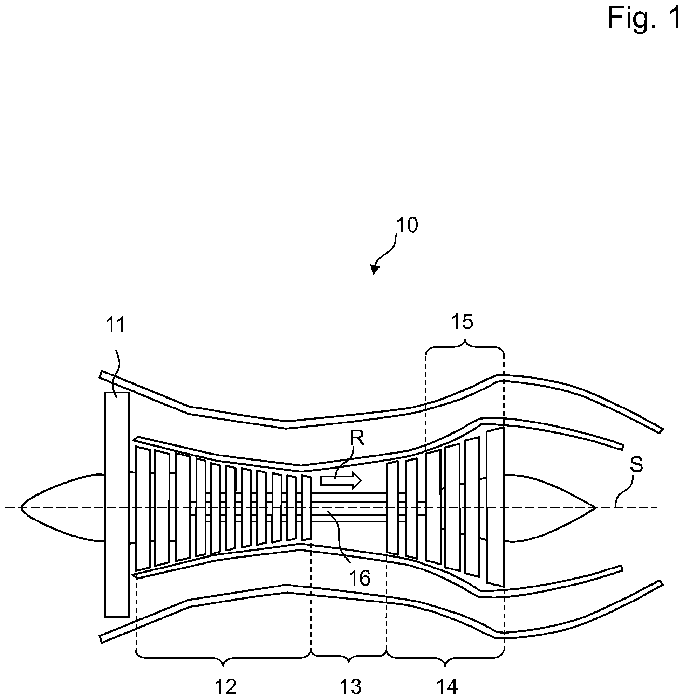

**Fig. 1** zeigt eine beispielhafte Darstellung eines Ausführungsbeispiels einer Strömungsmaschine 10 für ein Flugtriebwerk in einer schematischen Schnittansicht entlang der Strömungsmaschinenachse S.

Die Strömungsmaschine 10 weist in Strömungsrichtung R aufeinanderfolgend angeordnet einen Fan 11, einen Verdichter 12, eine Brennkammer 13 und eine Turbine 14 mit einer Niederdruckturbine 15 auf, die von einer Gasströmung in der Strömungsrichtung R durchströmbar sind bzw. in einem Betrieb der Strömungsmaschine 10 von der Gasströmung durchströmt werden. Dabei kann die Niederdruckturbine 15 über eine Welle 16 mit dem Verdichter 12 und/ oder dem Fan 11 verbunden sein, um diese, insbesondere über ein Getriebe anzutreiben. Ein Flugantrieb bzw. ein Flugtriebwerk kann eine solche Strömungsmaschine 10 aufweisen.

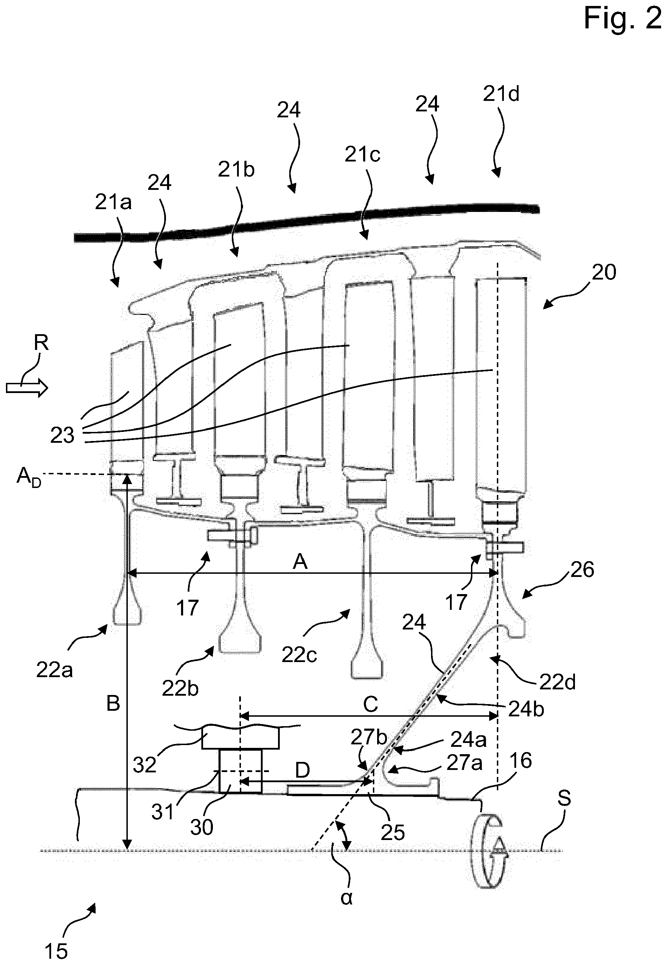

**Fig. 2** zeigt eine schematische Darstellung eines Ausschnitts eines Ausführungsbeispiels einer Niederdruckturbine 15 für eine Strömungsmaschine 10 für ein Flugtriebwerk mit einer erfindungsgemäßen Rotoranordnung 20.

In Fig. 2 sind exemplarisch vier entlang einer Strömungsmaschinenachse S hintereinander angeordnete Laufstufen 21a bis 21d der Rotoranordnung 20 gezeigt. Der dargestellte Ausschnitt zeigt hierbei nur einen Teil oberhalb der Strömungsmaschinenachse S im Bereich der Niederdruckturbine 15. Die einzelnen Laufstufen 21a bis 21d sind dabei drehfest über Flanschverbindungen 17 miteinander verbunden.

Die Laufstufen 21a bis 21d weisen je eine Rotorscheibe 22a bis 22d auf, an denen die jeweiligen Laufschaufeln 23 einer Schaufelreihe bzw. Laufschaufelanordnung insbesondere konzentrisch entlang einer Kreislinie um eine Mittelachse der Laufstufe 21 bzw. die Strömungsmaschinenachse S angeordnet und an der jeweiligen Rotorscheibe 22 über einen Schaufelfuß einer Laufschaufel 23 fixiert sind. Dabei sind die in Strömungsrichtung R vorderen drei Laufstufen 21a, 21b, 21c im Wesentlich ring- bzw. scheibenförmig ausgebildet.

In axialer Richtung wechseln sich rotierbare Laufstufen 21 mit feststehenden Leitstufen 24 ab. Die in Strömungsrichtung R letzte Laufstufe 21d der Rotoranordnung 20 ist mittels einer als Kegelscheibe ausgebildeten Rotorscheibe 22d an eine Welle 16 der Strömungsmaschine 10 anbindbar bzw. angebunden. Diese Rotorscheibe 22d ist dabei als sich in Strömungsrichtung R radial erweiternde Kegelscheibe ausgebildet und in axialer Richtung zwischen der ersten Laufstufe 21a und der letzten Laufstufe 21d radial innerhalb der Rotoranordnung 20 an die Welle 16 angebunden.

Zwischen einem Wellenanbindungsbereich 25 und einem Nabenbereich 26 der Rotorscheibe 22d erstreckt sich bei der dargestellten beispielhaften Ausführungsform eine kegelmantelförmig ausgebildete Wandung 24 der Rotorscheibe 22d. Die Wandung 24 weist dabei zwischen dem Wellenanbindungsbereich 25 und dem Nabenbereich 26 eine Verjüngung 24a und anschließend eine Aufweitung 24b der Wanddicke auf. Dabei divergiert die Wandung 24 jeweils in einem dem Wellenanbindungsbereich 25 und dem Nabenbereich 26 zugewandten Bereich, wobei der Wellenanbindungsbereich 25 in einem Übergangsbereich zu der Wandung Fillet-Radien 27a, 27b aufweist. Die Wandung 24 schließt dabei einen Winkel α im Bereich von 40° bis 60°, bei der dargestellten beispielhaften Ausführung ca. 53° mit der Welle 16 ein.

Ein axialer Abstand A zwischen der ersten Laufstufe 21a und der letzten Laufstufe 21d beträgt hierbei 18 cm bis 28 cm und ein radialer Abstand B zwischen der Strömungsmaschinenachse S und einem Außendurchmesser A_{D} der ersten Rotorscheibe 22a der ersten Laufstufe 21a kann 19 cm bis 32 cm betragen.

Die Rotoranordnung ist derart ausgelegt, dass ein Verhältnis zwischen dem axialen Abstand A und dem radialen Abstand B 0,8 bis 1,6 beträgt und/ oder ein Verhältnis zwischen dem axialen Abstand A und einem axialen Abstand C zwischen dem Lager des Rotors und der letzten Laufstufe 21d 1,0 bis 2,4 beträgt. Ein Verhältnis zwischen dem axialen Abstand A und einem Anbindungsabstand D zwischen dem Lager des Rotors und dem Wellenanbindungsbereich 25 beträgt 2,5 bis 3,5. In Fig. 2 ist beispielhaft eine Lagerrolle des Lagers 30 mit seiner Drehachse 31 dargestellt, mittels welcher eine Anbindung 32 der Welle 16 an einen Stator der Strömungsmaschine 10 bereitgestellt ist.

Eine gemäß einem oder mehreren vorgeschlagenen Aspekten gestaltete Rotoranordnung 20 kann eine Baulänge der Rotoranordnung 20 bzw. der Niederdruckturbine 15 und somit der Strömungsmaschine 10 reduzieren und mechanische und thermische Belastungen verbessert aufnehmen. Darüber hinaus kann eine reduzierte Bauteilezahl und/ oder ein verringertes Gewicht der Niederdruckturbine erreicht werden.

### BEZUGSZEICHENLISTE

- 10: Strömungsmaschine
- 11: Fan
- 12: Verdichter
- 13: Brennkammer
- 14: Turbine
- 15: Niederdruckturbine
- 16: Welle
- 17: Flanschverbindung

- 20: Rotoranordnung
- 21: Laufstufe
- 22: Rotorscheibe
- 23: Laufschaufel
- 24: Wandung
- 24a: Verjüngung
- 24b: Aufweitung
- 25: Wellenanbindungsbereich
- 26: Nabenbereich
- 27a,b: Filletradius

- 30: Lager des Rotors
- 31: Drehachse einer Lagerrolle
- 32: Statoranbindung

- A - D: Abstand
- A_{D}: Außendurchmesser der ersten Rotorscheibe
- R: Strömungsrichtung
- S: Strömungsmaschinenachse

## Patentansprüche

1. Rotoranordnung (20) für eine Niederdruckturbine (15) einer Strömungsmaschine (10) mit endseitiger Anbindung an eine Welle (16) der Strömungsmaschine (10), aufweisend mehrere in einer Strömungsrichtung (R) angeordnete und miteinander verbundene Laufstufen (21), **dadurch gekennzeichnet, dass** die Rotoranordnung (20) in Strömungsrichtung (R) an der letzten Laufstufe (21d) mittels einer Rotorscheibe (22d) an die Welle (16) anbindbar ist, wobei die Rotorscheibe (22d) als sich in Strömungsrichtung (R) radial erweiternde Kegelscheibe ausgebildet ist.

2. Rotoranordnung (20) nach Anspruch 1, wobei die als Kegelscheibe ausgebildete Rotorscheibe (22d) in axialer Richtung zwischen einer ersten Laufstufe (21a) und der letzten Laufstufe (21d) an die Welle (16) angebunden ist.

3. Rotoranordnung (20) nach wenigstens einem der vorhergehenden Ansprüche, wobei die als Kegelscheibe ausgebildete Rotorscheibe (22d) zwischen einem radial inneren Wellenanbindungsbereich (25) und einem radial äußeren Nabenbereich (26) eine Wandung (24) aufweist.

4. Rotoranordnung (20) nach Anspruch 3, wobei die Wandung (24) zwischen dem Wellenanbindungsbereich (25) und dem Nabenbereich (26) wenigstens eine Verjüngung (24a) und anschließend eine Aufweitung (24b) der Wanddicke aufweist.

5. Rotoranordnung (20) nach Anspruch 4, wobei die Verjüngung (24a) und die anschließende Aufweitung (24b) der Wanddicke der Wandung (24) vom Nabenbereich (26) zum Wellenanbindungsbereich (25) und/ oder vom Wellenanbindungsbereich (25) zum Nabenbereich (26) verläuft.

6. Rotoranordnung (20) nach wenigstens einem der Ansprüche 3 bis 5, wobei die Wandung (24) einen Winkel (α) im Bereich von 40° bis 60° und insbesondere im Bereich von 44° bis 56° mit der Rotationsachse (S) der Welle (16) einschließt.

7. Rotoranordnung (20) nach wenigstens einem der vorhergehenden Ansprüche, wobei die als Kegelscheibe ausgebildete Rotorscheibe (22d) am Wellenanbindungsbereich (25) wenigstens einen Fillet-Radius (27a, 27b) aufweist.

8. Rotoranordnung (20) nach wenigstens einem der vorhergehenden Ansprüche, wobei ein Lager (30) des Rotors radial innerhalb einer zweiten Laufstufe (21b) der Rotoranordnung (20) angeordnet ist.

9. Rotoranordnung (20) nach wenigstens einem der vorhergehenden Ansprüche, wobei ein axialer Abstand (A) zwischen der ersten Laufstufe (21a) und der letzten Laufstufe (21d) 18 cm bis 28 cm, insbesondere 21 cm bis 25 cm beträgt.

10. Rotoranordnung (20) nach wenigstens einem der vorhergehenden Ansprüche, wobei ein radialer Abstand (B) zwischen einer Strömungsmaschinenachse (S) und einem Außendurchmesser (A_{D}) einer ersten Rotorscheibe (22a) der ersten Laufstufe (21a) 19 cm bis 32 cm beträgt.

11. Rotoranordnung (20) nach wenigstens einem der vorhergehenden Ansprüche, wobei ein Verhältnis zwischen dem axialen Abstand (A) zwischen der ersten Laufstufe (21a) und der letzten Laufstufe (21d) und dem radialen Abstand (B) der Strömungsmaschinenachse (S) zu dem Außendurchmesser (A_{D}) der ersten Rotorscheibe (22a) 0,8 bis 1,6 und insbesondere 0,95 bis 1,45 beträgt.

12. Rotoranordnung (20) nach wenigstens einem der vorhergehenden Ansprüche, wobei ein Verhältnis zwischen dem axialen Abstand (A) zwischen der ersten Laufstufe (21a) und der letzten Laufstufe (21d) und einem axialen Abstand (C) zwischen dem Lager (30) des Rotors und der letzten Laufstufe (21d) 1,0 bis 2,4 und insbesondere 1,2 bis 1,7 beträgt.

13. Rotoranordnung (20) nach wenigstens einem der vorhergehenden Ansprüche, wobei ein Verhältnis zwischen dem axialen Abstand (A) zwischen der ersten Laufstufe (21a) und der letzten Laufstufe (21d) und einem Anbindungsabstand (D) zwischen dem Lager (30) des Rotors und dem Wellenanbindungsbereich (25) 2,5 bis 3,5 und insbesondere 2,7 bis 3,3 beträgt.

14. Niederdruckturbine (15) für eine Strömungsmaschine (10), insbesondere ein Flugtriebwerk mit einer vierstufigen Niederdruckturbine (15), aufweisend eine nach wenigstens einem der vorhergehenden Ansprüche ausgebildete Rotoranordnung (20).

15. Strömungsmaschine (10), insbesondere Flugtriebwerk, aufweisend eine Rotoranordnung (20), ausgebildet nach wenigstens einem der Ansprüche 1 bis 13 und/ oder eine Niederdruckturbine (15) ausgebildet nach Anspruch 14.
